# EUROPEAN PATENT SPECIFICATION

(11) **EP 2 340 974 B1**
(45) Date of publication and mention of the grant of the patent: **16.04.2014**
(21) Application number: 10193068.3
(22) Date of filing: 30.11.2010
(51) Int. Cl.: B60T 17/00, B60T 17/02, B60C 23/00

(54) **Air supply systems**
Luftzufuhrsystem
Systèmes d'alimentation en air

(30) Priority: 17.12.2009 GB 0922016
(43) Date of publication of application: 06.07.2011
(73) Proprietor: AGCO GmbH, 87616 Marktoberdorf (DE)
(72) Inventor: Knobloch, Jurgen, 87674 Immenhofen (DE)
(74) Representative: Morrall, Roger

(56) References cited:
- EP-A2- 0 071 278
- EP-A2- 1 243 447
- WO-A1-2004/005100
- DE-B3-102004 038 705
- DE-C1- 10 016 970
- JP-A- 5 155 212

## Description

This invention relates to air supply systems and in particular to such systems for supplying pressurised air from a compressor to operate a range of functions on a tractor such as the braking system and a system for inflating the tyres of the tractor.

Such air supply systems are normally provided with air driers in order to remove moisture from the air to prevent icing of the pipes and valves which can cause significant damage. Such air driers introduce significant restriction in the flow of air within the supply system and this is a particular problem when, for example, changing tyre pressures from the say 0.8 bar which is used in field operations to say 1.8 bar which is the pressure used for more efficient road operation. Such state of the art air supply arrangements are described in for example JP 5 155 212 A and DE 10 2004 038 705 B3.

It is an object of the present invention to provide an air supply system which addresses the above problem.

Thus according to the present invention there is provided an air supply system for supplying a primary set of consumers and a secondary consumer in the form of a tyre pressure control system, both sets of consumers being supplied with pressurised air from a compressor, the system also including an air drier and a protection means to ensure that the primary set of consumers takes priority over the tyre pressure control system and that the tyre pressure control system is activated when the air pressure in the supply system exceeds a predetermined level, the system being **characterised in that** the pressurised air is supplied to the tyre pressure control system without passage through the air drier and in that the compressor is switched into an idle mode when the air pressure available in the supply system exceeds said predetermined level.

Such an air supply system offers a tyre pressure control system which is capable of changing tyre pressures from field to road levels in an acceptable period of time.

For example, a pilot line connected to the compressor switches the compressor into its idle mode when the air pressure available in the supply system and which is communicated to the compressor by the pilot line exceeds said predetermined level.

In such an arrangement the pilot line may be connected with the compressor via a first two-position valve which is biased to a first position in which the pilot line is connected to the compressor but which can be displaced to a second position in which the pilot line is disconnected from the compressor when it is desired to operate the tyre pressure control system, the tyre pressure control system being connected with the compressor via a second two position valve which is biased to connect the compressor to the primary set of consumers and which is moved to its second position to connect the compressor to the tyre pressure control system by the pilot line pressure supplied to the second valve when the first valve is in its second position.

The pressurised air from the compressor is passed through the air drier prior to supply to the primary sets of consumers.

The air drier may include a granule cartridge which is regenerated by receiving pressurised air when the supply system air pressure exceeds said predetermined level.

In such an arrangement the tyre pressure control system may be connected with the compressor via a two position valve which is biased to connect the compressor to the primary set of consumers and which is moved to its second position to connect the compressor to the tyre pressure control system by a pilot line from the air drier when the supply system air pressure exceeds said predetermined level and the tyre pressure has been activated.

The operation of the tyre pressure control system may be activated manually.

Alternatively the operation of the tyre pressure control system is activated automatically.

A protection valve means may be provided which balances the pressure supplied to the primary set of consumers and cuts the supply to any consumer which develops a leak.

The present invention will now be described, by way of example only, with reference to the accompanying drawings in which:-
Figure 1 shows diagrammatically a first form of air supply system in accordance with the present invention;
Figure 2 shows diagrammatically a second form of air supply system;
Figure 3 shows diagrammatically a third form of air supply system in accordance with the present invention, and
Figure 4 shows diagrammatically a modified form of the system shown in Figure 3.

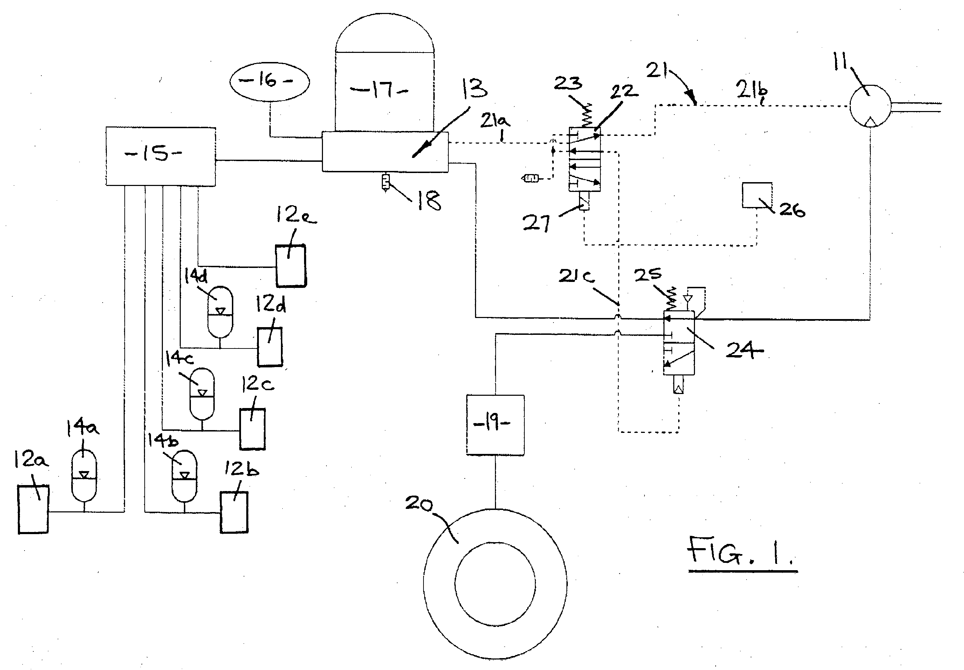

Referring to Figure 1, a tractor air supply system 10 has a compressor 11 which supplies a primary set of consumers 12a to 12e via an air drier 13. Typically primary consumers 12a and 12b will comprise the two circuits of a twin circuit braking system, consumer 12c will be a trailer braking system, consumer 12d will be a front suspension system and consumer 12e will be a cab suspension system. As shown, some of these consumers may have their own accumulators 14a to 14d.

The primary consumers 12a to 12e are supplied with pressure from the compressor 11 via a protection valve means 15 which balances the pressure required to be supplied to the primary set of consumers and which will cut the supply to any primary consumer should a consumer develop a leak thus preserving the integrity of the remaining primary consumers.

Air drier 13 has a regeneration reservoir 16 and a drier cartridge 17 filled with moisture absorbing granules. The drier also has a pressure release valve (not shown) which prevents the development of excessive air pressure from compressor 11.

When the air pressure available in the supply system reaches a predetermined level of say 8.6 bar the drier is arranged to go into a regeneration process in which air stored in regeneration reservoir 16 is flushed through the moisture absorbing granules contain in drier cartridge 17 to carry the water absorbed in the granules out of the drier to the atmosphere via a noise absorber 18.

The compressor 11 also supplies a secondary consumer in the form of a tyre pressure control system 19 which is used to control the inflation pressure within one or more tyres 20 of the associated tractor. As the precise form of the tyre pressure control system does not form part of the present invention it will not be described in any greater detail in the present application and it will be understood that any suitable form of tyre pressure control system can be used for allowing quick and efficient increasing and decreasing of the current pressure within the tyres of the tractor.

A pilot line 21 extends from the air drier 13 to the compressor 11 via a first two position valve 22. Valve 22 is biased by a spring 23 to the position shown in Figure 1 in which the two portions 21a and 21b of the pilot line 21 are connected so that the level of air pressure currently available in the supply system is communicated to the compressor. If the level of air pressure in the drier 13 reaches the predetermined level, which is typically 8.6 bar, then a discharge (relief) valve (not shown) opens, line 21 is pressurised and the compressor is arranged to go into an idle mode in which the volume of air delivered by the compressor (which is typically of the order of 1000 litres/min) is significantly reduced (say to 15% of normal output) and thus the power acquired to drive the compressor is also reduced.

The compressor 11 is connected with the air drier 13 and tyre pressure control system 19 via a second two position valve 24 which is biased by a spring 25 to the position shown in Figure 1 in which the compressor 11 is connected with the drier 13.

If the tractor operator wishes to use the tyre pressure control system he presses switch 26 which operates solenoid 27 on valve 22 and thus moves the valve to a second position which disconnects pilot line 21 from compressor 11 thereby ensuring that the compressor continues to deliver its full output. When the valve 22 moves to its second position the pressure in portion 21a of pilot line 21 is also fed to the opposite end of valve 24 from a spring 25 via line 21c and, if the pressure in line 21a is at or above the predetermined level of 8.6 bar, the valve 24 is moved to its second position in which the compressor 11 is directly connected with the tyre pressure control system 19 and the primary consumers 12a to 12e continue to be fed from the currently available maximum system pressure available at the protection valve means 15 despite their disconnection from compressor 11.

If, when the switch 26 is pressed, the pressure available in the system has not reached the predetermined 8.6 bar level the valve 24 will not move to its second position until this predetermined system supply pressure has been achieved by the compressor 11 which will continue to supply the drier 13 via valve 24 at its maximum output.

As will be appreciated, the above arrangement thus enables the tyre pressure control system to receive the predetermined pressure of 8.6 bar when tyre pressure control system is activated by operation of switch 26 without any restriction in volume flow rate since the air supplied to the tyre pressure control system 19 does not pass through the air drier 13. Typically the maximum flow rate of the compressor is 1000 litres/min and this would be seriously restricted to say 400 litres/min if the tyre pressure control system was supplied via the air drier.

As will be appreciated, although in the arrangement described above the system is activating manually by depressing the switch 26 it is possible for the system to be automatically actuated when an overall tractor control system senses that the usage of the tractor has changed from, for example, a field use situation into a road use situation with the consequent different tyre pressure requirements.

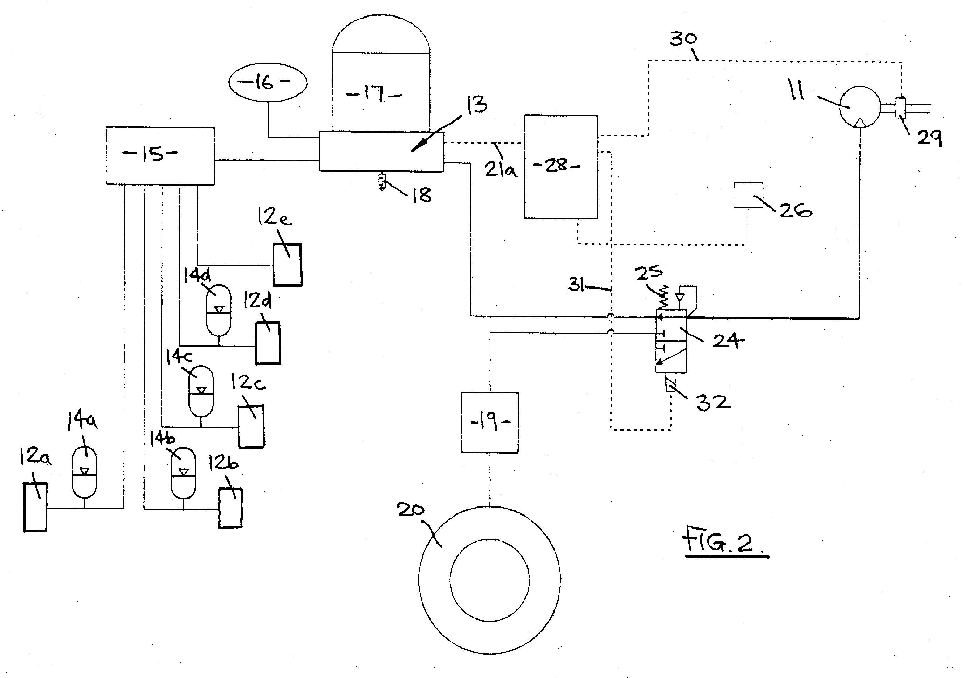

Figure 2 shows an alternative form of air supply system in which the first two position valve 22 of Figure 1 is replaced by a control unit 28 which receives a signal indicative of the current air supply system pressure available from the system via line 21a and which, when the current air supply system pressure reaches the predetermined 8.6 bar level, issues an output signal via line 30 to a clutch 29 which drives compressor 11 in order to disconnect the drive to compressor 11 to save power.

When the predetermined system pressure of 8.6 bar is reached the control unit 28 also issues a signal via line 31 to a solenoid 32 associated with the second two position valve 24 in order to move the valve 24 to its second position and hence connect the compressor 11 with the tyre pressure control system 19.

Thus when the tyre pressure control system is activated, by the operation of switch 26 or by some automatic activation, and the pressure currently available in the supply system has reached the predetermined level of 8.6 bar, the tyre pressure control system 19 receives the full output of compressor 11 via valve 24 without the air passing through the drier 13. This again ensures an efficient operation of the tyre pressure control system.

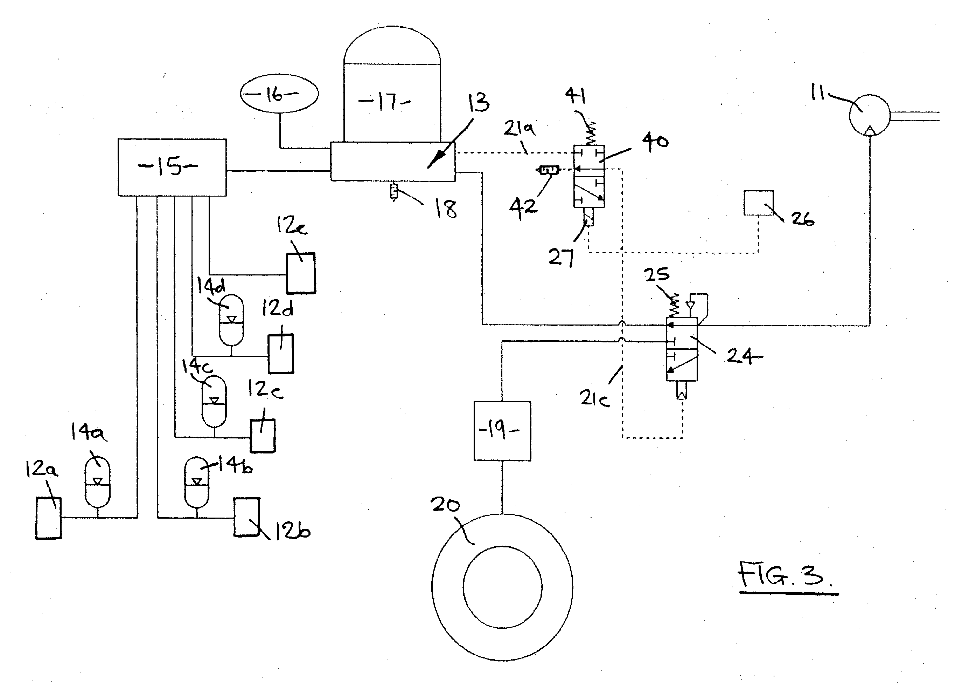

Figure 3 shows a still further form of supply system in which no provision is made to either disconnect drive to the compressor 11 or to turn the compressor into an idle mode of operation. In Figure 3, to activate the tyre pressure control system, the switch 26 is operated (or the system is activated automatically) to actuate a solenoid 27 associated with a first two position control valve 40 which is normally biased by the spring 41 to the Figure 3 position, in which the pilot line 21a is disconnected from line 21c and the pressure in line 21c is vented to atmosphere through a noise reducer 42. When solenoid 27 is activated the valve 40 moves to its second position in which the pressure in the pilot line 21a is fed via line 21c to the opposite end of valve 24 from spring 25 to move the second two position valve 24 to its second position in which the compressor 11 is connected with the tyre pressure control system 19 without the passage of the air through the air drier 13. The level of spring loading provided by the spring 25 was arranged so that until the pressure in pilot line 21a, 21c reaches the predetermined system pressure of 8.6 bar the valve 24 is not moved to its second position.

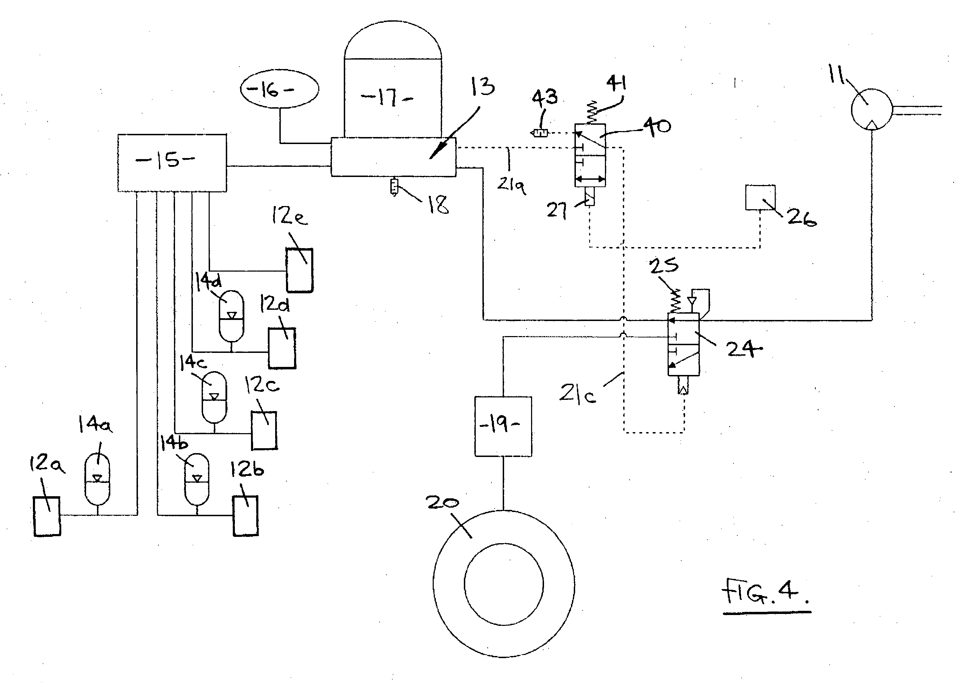

Figure 4 shows a slightly modified form of the system shown in Figure 3 in which when the pilot line 21a is disconnected from the line 21c the pressure in line 21c is vented to atmosphere through a noise reducer 43. Otherwise the operation of the system shown in Figure 4 is as described in relation to the system of Figure 3.

As will be appreciated from the above, the present invention thus provides and air supply system which is particularly suitable for use on tractors and which uses an air drier to dry air supplied to a primary set of consumers which is able, when the predetermined system pressure is reached, to supply a tyre pressure control system with pressurised air without the passage of the air through the air drier. This ensures the efficient operation of the tyre pressure control system without losses incurred when the air is supplied via an air drier.

## Claims

1. An air supply system for supplying a primary set of consumers (12a-12d) and a secondary consumer in the form of a tyre pressure control system (19), both sets of consumers being supplied with pressurised air from a compressor (11), the system also including an air drier (13) and a protection means (15) to ensure that the primary set of consumers takes priority over the tyre pressure control system and that the tyre pressure control system is activated when the air pressure in the supply system exceeds a predetermined level, the system being **characterised in that** the pressurised air is supplied to the tyre pressure control system (19) without passage through the air drier (13) and **in that** the compressor (11) is switched into an idle mode when the air pressure available in the supply system exceeds said predetermined level.

2. An air supply system according to claim 1 in which a pilot line (21) connected to the compressor (11) switches the compressor into its idle mode when the air pressure available in the supply system and which is communicated to the compressor by the pilot line exceeds said predetermined level.

3. An air supply according to claim 2 in which the pilot line (21) is connected with the compressor (11) via a first two-position valve (22) which is biased (23) to a first position in which the pilot line is connected to the compressor but which can be displaced (27) to a second position in which the pilot line is disconnected from the compressor when it is desired to operate the tyre pressure control system (19), the tyre pressure control system being connected with the compressor (11) via a second two position valve (24) which is biased (25) to connect the compressor (11) to the primary set of consumers (12a-12d) and which is moved to its second position to connect the compressor (11) to the tyre pressure control system (19) by the pilot line pressure supplied to the second valve (24) when the first valve (22) is in its second position.

4. An air supply system according to claim 1 in which pressurised air from the compressor (11) is passed through the air drier (13) to supply to the primary sets of consumers (12a-12d).

5. An air supply system according to claim 4 in which the air drier (13) includes a granule cartridge (17) which is regenerated by receiving pressurised air when the supply system air pressure exceeds said predetermined level.

6. An air supply system according to claim 5 in which the tyre pressure control system (19) is connected with the compressor (11) via a two position valve (24) which is biased (25) to connect the compressor to the primary set of consumers (12a-12d) and which is moved to its second position to connect the compressor to the tyre pressure control system by a pilot line (21a) from the air drier (13) when the supply system air pressure exceeds said predetermined level.

7. An air supply system according to any one of claims 1 to 6 in which the operation of the tyre pressure control system (19) is activated manually.

8. An air supply system according to any one of claims 1 to 6 in which the operation of the tyre pressure control system (19) is activated automatically.

9. An air supply system according to any one of claims 1 to 8 which includes protection valve means (15) which balances the pressure supplied to the primary set of consumers and cuts the supply to any consumer which develops a leak.

## Patentansprüche

1. Luftversorgungsanlage zur Versorgung einer primären Verbrauchergruppe (12a-12d) und eines sekundären Verbrauchers in Form einer Reifendruckregelanlage (19), wobei beide Verbrauchergruppen mit Druckluft von einem Kompressor (11) versorgt werden und die Anlage auch einen Lufttrockner (13) und ein Schutzmittel (15) beinhaltet, um sicherzustellen, dass die primäre Verbrauchergruppe Vorrang gegenüber der Reifendruckregelanlage erhält und dass die Reifendruckregelanlage aktiviert ist, wenn der Luftdruck in der Versorgungsanlage einen vorbestimmten Pegel überschreitet, wobei das System **dadurch gekennzeichnet ist, dass** die Druckluft der Reifendruckregelanlage (19) ohne Durchgang durch den Lufttrockner (13) zugeführt wird, sowie dadurch, dass der Kompressor (11) in einen Ruhemodus schaltet, wenn der verfügbare Luftdruck in der Versorgungsanlage den genannten vorbestimmten Pegel überschreitet.

2. Luftversorgungsanlage nach Anspruch 1, bei der eine mit dem Kompressor (11) verbundene Steuerleitung (21) den Kompressor in den Ruhemodus schaltet, wenn der verfügbare Luftdruck in der Versorgungsanlage, der über die Steuerleitung zum Kompressor übertragen wird, den vorbestimmten Pegel überschreitet.

3. Luftversorgungsanlage nach Anspruch 2, bei der die Steuerleitung (21) mit dem Kompressor (11) über ein erstes Zwei-Positionen-Ventil (22) verbunden ist, das in eine erste Position vorgespannt wird (23), in der die Steuerleitung mit dem Kompressor verbunden ist, die aber in eine zweite Position umgestellt werden kann (27), in der die Steuerleitung von dem Kompressor getrennt ist, wenn die Reifendruckregelanlage (19) betrieben werden soll, wobei die Reifendruckregelanlage mit dem Kompressor (11) über ein zweites Zwei-Positionen-Ventil (24) verbunden ist, das in die entsprechende Position vorgespannt wird (25), um den Kompressor (11) mit der primären Verbrauchergruppe (12a-12d) zu verbinden, und das in seine zweite Position umgestellt wird, um den Kompressor (11) mit der Reifendruckregelanlage (19) über den Steuerleitungsdruck zu verbinden, mit dem das zweite Druckventil (24) versorgt wird, wenn das erste Ventil (22) in der zweiten Position steht.

4. Luftversorgungsanlage nach Anspruch 1, bei der Druckluft aus dem Kompressor (11) durch den Lufttrockner (13) geführt wird, um die primären Verbrauchergruppen (12a-12d) zu versorgen.

5. Luftversorgungsanlage nach Anspruch 4, bei der der Lufttrockner (13) mit einer Granulatpatrone (17) ausgestattet ist, die durch Aufnahme von Druckluft regeneriert wird, wenn der Luftdruck in der Luftversorgungsanlage den vorbestimmten Pegel überschreitet.

6. Luftversorgungsanlage nach Anspruch 5, bei der die Reifendruckregelanlage (19) mit dem Kompressor (11) über ein Zwei-Positionen-Ventil (24) verbunden ist, das so vorgespannt (25) wird, dass der Kompressor mit der primären Verbrauchergruppe (12a-12d) verbunden wird, und das in die zweite Position umgestellt wird, um den Kompressor mit der Reifendruckregelanlage über eine Steuerleitung (21a) vom Lufttrockner (13) zu verbinden, wenn der Luftdruck in der Versorgungsanlage den vorbestimmten Pegel überschreitet.

7. Luftversorgungsanlage nach einem der Ansprüche 1 bis 6, bei der der Betrieb der Reifendruckregelanlage (19) manuell aktiviert wird.

8. Luftversorgungsanlage nach einem der Ansprüche 1 bis 6, bei der der Betrieb der Reifendruckregelanlage (19) automatisch aktiviert wird.

9. Luftversorgungsanlage nach einem der Ansprüche 1 bis 8, die ein Schutzventil (15) beinhaltet, das den der primären Verbrauchergruppe zugeführten Druck ausgleich und das die Luftversorgung zu einem Verbraucher unterbindet, in dem ein Leck auftritt.

## Revendications

1. Dispositif d'alimentation en air destiné à alimenter un premier ensemble de consommateurs (12a à 12d) et un consommateur secondaire sous la forme d'un dispositif de commande de pression de pneu (19), les deux ensembles de consommateurs étant alimentés en air comprimé à partir d'un compresseur (11), le dispositif comportant aussi un sécheur d'air (13) et un moyen de protection (15) destiné à assurer que le premier ensemble de consommateurs dispose de la priorité sur le dispositif de commande de pression de pneu et que le dispositif de commande de pression de pneu est activé lorsque la pression d'air dans le dispositif d'alimentation excède un niveau prédéterminé, le dispositif étant **caractérisé en ce que** l'air comprimé est délivré au dispositif de commande de pression de pneu (19) sans passage à travers le sécheur d'air (13) et **en ce que** le compresseur (11) est commuté dans un mode inactif lorsque la pression d'air disponible dans le circuit d'alimentation excède ledit niveau prédéterminé.

2. Dispositif d'alimentation en air selon la revendication 1, dans lequel une ligne pilote (21), raccordée au compresseur (11), commute le compresseur dans son mode inactif lorsque la pression d'air disponible sur le dispositif d'alimentation et qui est communiquée au compresseur par la ligne pilote excède ledit niveau prédéterminé.

3. Alimentation en air selon la revendication 2, dans laquelle la ligne pilote (21) est raccordée au compresseur (11) par l'intermédiaire d'une première vanne à deux positions (22) qui est préchargée (23) vers une première position dans laquelle la ligne pilote est raccordée au compresseur, mais qui peut être déplacée (27) vers une seconde position dans laquelle la ligne pilote est déconnectée du compresseur lorsqu'on désire faire fonctionner le dispositif de commande de pression de pneu (19), le dispositif de commande de pression de pneu étant raccordé au compresseur (11) par l'intermédiaire d'une seconde vanne à deux positions (24) qui est préchargée (25) de manière à raccorder le compresseur (11) au premier ensemble de consommateurs (12a à 12d) et qui est déplacée vers sa seconde position afin de raccorder le compresseur (11) au dispositif de commande de pression de pneu (19) par la pression de ligne pilote délivrée à la seconde vanne (24) lorsque la première vanne (22) est dans sa seconde position.

4. Dispositif d'alimentation en air selon la revendication 1, dans lequel l'air comprimé provenant du compresseur (11) passe à travers le sécheur d'air (13) afin d'alimenter les premiers ensembles de consommateurs (12a à 12d).

5. Dispositif d'alimentation en air selon la revendication 4, dans lequel le sécheur d'air (13) comporte une cartouche à granulés (17) qui est régénérée en recevant de l'air comprimé lorsque la pression d'air du dispositif d'alimentation excède ledit niveau prédéterminé.

6. Dispositif d'alimentation en air selon la revendication 5, dans lequel le dispositif de commande de pression de pneu (19) est raccordé au compresseur (11) par l'intermédiaire d'une vanne à deux positions (24) qui est préchargée (25) de manière à raccorder le compresseur au premier ensemble de consommateurs (12a à 12d) et qui est déplacée vers sa deuxième position de manière à raccorder le compresseur au dispositif de commande de pression de pneu par une ligne pilote (21a) à partir du sécheur d'air (13) lorsque la pression d'air du dispositif d'alimentation excède ledit niveau prédéterminé.

7. Dispositif d'alimentation en air selon l'une quelconque des revendications 1 à 6, dans lequel le fonctionnement du dispositif de commande de pression de pneu (19) est activé manuellement.

8. Dispositif d'alimentation en air selon l'une quelconque des revendications 1 à 6, dans lequel le fonctionnement du dispositif de commande de pression de pneu (19) est activé automatiquement.

9. Dispositif d'alimentation en air selon l'une quelconque des revendications 1 à 8, qui comporte un moyen formant vanne de protection (15) qui équilibre la pression délivrée au premier ensemble de consommateurs et coupe l'alimentation vers un consommateur quelconque sur lequel une fuite se développe.
